# EUROPÄISCHE PATENTSCHRIFT

(11) **EP 1 259 401 B1**
(45) Veröffentlichungstag und Bekanntmachung des Hinweises auf die Patenterteilung: **17.01.2007**
(21) Anmeldenummer: 01913550.8
(22) Anmeldetag: 31.01.2001
(51) Int. Cl.: B60R 16/02

(54) **STEUERMODUL UND VORRICHTUNG ZUR DURCHFÜHRUNG VON STEUERUNGS- ODER REGELUNGSFUNKTIONEN FÜR EIN FAHRZEUG**
CONTROL MODULE AND DEVICE FOR CARRYING OUT CONTROL OR REGULATION FUNCTIONS FOR A VEHICLE
MODULE ET DISPOSITIF POUR L'EXECUTION DE FONCTIONS DE COMMANDE OU DE REGULATION POUR UN VEHICULE

(30) Priorität: 23.02.2000 DE 10008455
(43) Veröffentlichungstag der Anmeldung: 27.11.2002
(73) Patentinhaber: ROBERT BOSCH GMBH, 70442 Stuttgart (DE)
(72) Erfinder: HORBELT, Michael, 71706 Markgroeningen (DE); OWERFELDT, Andre, 71706 Markgroeningen (DE)
(86) Internationale Anmeldenummer: PCT/DE2001/000363
(87) Internationale Veröffentlichungsnummer: WO 2001/062550

(56) Entgegenhaltungen:
- EP-A- 0 890 485
- WO-A-01/23233
- US-A- 5 255 962
- US-A- 5 424 586
- US-A- 5 990 573

## Beschreibung

### Stand der Technik

Die vorliegende Erfindung betrifft ein Steuermodul und eine Vorrichtung zur Durchführung von Steuerungs- oder Regelungsfunktionen für ein Fahrzeug.

Bei Regelungs- oder Steuerungsaufgaben in einem Fahrzeug werden verschiedene Funktionen typischerweise mittels unterschiedlicher Vorrichtungen, welche jeweils den Funktionen individuell angepasste Steuereinheiten aufweisen, durchgeführt. Als Beispiele dafür seien Fahrwerksfunktionen steuernde Vorrichtungen für Antiblockiersystem, Antriebsschlupfregelung, Fahrdynamikregelung oder sonstige die Raddrehzahl beeinflussende, insbesondere die Fahrstabilität und/oder die Sicherheit erhöhende Systeme ebenso genannt wie Antriebs- oder Getriebesteuerung. Dabei werden entsprechend der jeweiligen Anwendung, also der durchzuführenden Steuerungs- oder Regelungsfunktionen unterschiedliche Steuergeräte, wie Bremsensteuergerät, Motorsteuergerät oder Getriebesteuergerät eingesetzt, welche häufig über einen fahrzeuginternes Kommunikationssystem, insbesondere ein Bussystem wie CAN oder TTP/C, verbunden sind. Weiterhin existieren im Fahrzeug Funktionen, die den Einsatz mehrerer vergleichbarer, also im Hardwareaufbau ähnlicher Steuergeräte notwendig machen. Dies gilt beispielsweise für Schließsysteme oder für die Ansteuerung von Stellmotoren, wie bei Fensterhebern oder bei Aussenspiegelverstellungen, bei welchen sich die Funktionen und damit auch die vergleichbaren Steuergeräte z.B. entsprechend der Anzahl der Fahrzeugtüren mehrmals eingestzt werden müssen. Allgemein wird aus Aufwands- und Kostengründen angestrebt, Standardsteuergeräte, also universell einsetzbare Steuergeräte zu verwenden, welche im Rahmen von unterschiedlichen Funktionen einsetzbar sind. Das bedeutet, dass obwohl die Funktionalität beispielsweise bei einem Schließsystem unter Berücksichtigung der Beifahrerzur Fahrertür und der vorderen zu den hinteren Türen leicht variiert, man versuchen wird, für jede einzelne Tür aus Aufwandsgründen jeweils ein und dasselbe Standardsteuergerät einzusetzen oder zumindest die Variantenvielfalt der Steuergeräte bzw. Steuereinheiten möglichst gering zu halten, da sonst bei besagtem Schliesssystem bis zu drei unterschiedliche Steuereinheiten eingesetzt werden müssten.

Die DE 37 38 915 A1 zeigt dazu ein universell einsetzbares Steuergerät für Regeleinrichtungen. Dabei wird ein solches Universalsteuergerät eingesetzt, welches erst nach der Montage aufgrund eines äusseren Befehls feststellt, welche Systemauslegung vorliegt, um diese dann abzuspeichern. Ein solches Universalsteuergerät muß aber zur Gewährleistung einer grösseren Anzahl von insbesondere unterschiedlichen Regelungs- oder Steuerfunktionen eine Vielzahl variantenbestimmender Komponenten, also jeweils entsprechend speziell ausgebildete Schaltungsteile und/oder Bauteile und individualisierte Schnittstellen über welche die entsprechenden Sensoren oder Aktuatoren mit dem Steuergerät zusammenwirken können gleichzeitig aufweisen.

Die Integration derartiger variantenbestimmender Schaltungsteile und Schnittstellen für die gewünschten Steuerfunktionen in einem Steuergerät erweist sich als relativ aufwendig und kostenintensiv. Die Notwendigkeit eines solchen Universalsteuergerätes eine Vielzahl unterschiedlicher Steuerungs- oder Regelungsaufgaben zu erfüllen, wirkt sich auf die Komplexität der Steuereinheit aus, bedingt durch die variantenbestimmenden Schaltungsteile und Schnittstellen, welche nebeneinander vorhanden sein müssen. Auch bezüglich des Bauraums wird eine solche Universalsteuereinheit grösser als eine speziell auf die jeweilige Regelungs- oder Steuerungsaufgabe abgestimmte Steuergerätevariante bemessen sein.

Bekannt ist ebenfalls, die Verwendung mehrerer im HardwareAufbau gleicher elektronischer Steuergeräte, die in einem Fahrzeug verbaut sind. Diesen über einen Bus kommunizierenden Steuergeräten wird ihre spezifische Funktion von aussen je nach ihrer konkreten Anwendung aufgeprägt. Auch hier müssen variantenbestimmende Schaltungsteile und Schnittstellen entsprechend dem Universalsteuergerät zur Durchführung der möglichen bzw. gewünschten vorgebbaren Regelungs- oder Steuerungsfunktionen in jedem Steuergerät vorhanden sein.

Die druckschriftlich nicht vorveröffentlichte WO 01/23233 A1, die den nächstkommenden Stand der Technik nach Artikel 54 (3) und (4) EPÜ darstellt, umfasst eine Anordnung zur Durchführung einer elektronischen Steuerung bzw. Regelung, insbesondere von Funktionen eines Kraftfahrzeugs, mit wenigstens einem elektronischen Steuergerät, und wenigstens einem dem Steuergerät zugeordneten Aktor und/oder Sensor. Der wenigstens eine Aktor und/oder Sensor ist über eine Steuergerät-Aktor/Sensor- Schnittstelle ansteuerbar. Zwischen den jeweiligen Schnittstellen und Aktor und/oder Sensor sind aus dem Steuergerät ausgelagerte variantenbestimmende Schaltungsteile, insbesondere Treibermodule, vorgesehen. Die jeweilige Schnittstelle weist einen standardisierten steuergeräteseitigen und einen bezüglich des Steuergeräts ausgelagerten, individualisierten Teilabschnitt auf. Bevorzugt sind der individualisierte Teil der Schnittstelle und/oder der variantenbestimmende Schaltungsteil in einem das Steuergerät und den Aktor oder Sensor verbindenden Kabel angeordnet. Hierdurch können für unterschiedliche Regelungs- bzw. Steuerungsaufgaben weitgehend standardisierte Steuergeräte verwendet werden.

Es zeigt sich somit, daß der Stand der Technik nicht in jeder Hinsicht optimale Ergebnisse zu liefern vermag. So soll durch die nachfolgende Erfindung die Möglichkeit geschaffen werden eine Viehlzahl unterschiedlichster Regelungs- und Steuerungsfunktionen unter Optimierung der Aufwands- und Kostengesichtspunkte durchzuführen.

### Vorteile der Erfindung

Die Erfindung zeigt ein Steuermodul nach Anspruch 1, und nach Anspruch 4 eine Vorrichtung zur Durchführung von Steuerungs- oder Regelungsfunktionen für ein Fahrzeug, mit einem entsprechenden Steuermodul sowie einer Steuereinheit und einem Peripherieelement. Das Peripherieelement ist mit der Steuereinheit verbunden und empfängt und/oder sendet signale, und die Steuerungs- oder Regelungsfunktionen werden durch eine Ansteuerung und/oder eine Auswertung der Signale des Peripherieelementes durchgeführt, wobei vorteilhafterweise die Vorrichtung wenigstens ein zwischen die Steuereinheit und das Peripherieelement geschaltetes Steuermodul enthält, welches aus einer Elektronikeinheit und einer flexiblen Erweiterung zusammengesetzt ist und das Peripherieelement an die flexible Erweiterung kontaktiert ist. Dadurch kann zweckmässigerweise die spezifische, variantenbestimmende Steuer- oder Regelelektronik bezogen auf die Regelstrecke vor Ort eingesetzt werden, wodurch vorteilhafterweise die Peripherieelemente, also insbesondere Aktuatoren und Sensoren, sehr flexibel und sinnvoll bezüglich der Regelstrecke plaziert werden können.

Als flexible Erweiterung wird eine Folienerweiterung, insbesondere eine Leiterfolie eingesetzt, wobei Leitungsbahnen oder Leitungsstrukturen zur Energie- und/oder Signalübertragung zu und/oder von den Peripherieelementen von einem nichtleitenden, flexiblen, insbesondere verformbaren, Material, wie Kunststoff umschlossen sind. Dabei ist dann von Vorteil, dass neben der flexiblen Plazierung der Steuermodule bzw. der Peripherieelemente auch Problematiken wie für die Leiterstrukturen bzw. die Signal- und/oder Energieleitung ungünstige Umgebungseinflüsse weitgehend ausgeschlossen werden können. Weiterhin können vorteilhafterweise die Leiterstrukturen bzw. die flexible Erweiterung auch im Zuge der Problematik der elektomagnetischen Verträglichkeit zusätzlich gegenüber solchen Störungen abgeschirmt werden und/oder es kann die Aussendung eigener Störstrahlung, durch das Steuermodul bzw. die flexible Erweiterung und/oder darauf plazierter Bauteile, insbesondere über die Leitungsstrukturen, eingedämmt oder verhindert werden.

Weiterhin von Vorteil ist die Verwendung einer einheitlichen, standardisierten Schnittstelle zwischen der flexiblen Erweiterung, insbesondere der Leiterfolie, und der Elektronikeinheit, weil damit unterschiedliche Elektronikeinheiten mit beliebig gestalteten flexiblen Erweiterungen zu Steuermodulen kombiniert werden können.

Vorteilhafterweise werden elektronische Bauteile auf der flexiblen Erweiterung aufgebracht und angesteuert bzw. ausgewertet. Dadurch kann z.B. zwischen Sensoren und den zu sensierenden Elementen optimaler Kontakt bzw. eine optimale Wirkbeziehung hergestellt werden. Ebenfalls vorteilhafterweise können Bauteile zur Ansteuerung von Aktuatoren, insbesondere Leistungsbauteile, auf der flexiblen Erweiterung so angebracht werden, dass sie räumlich zu den Aktoren wandern und damit durch Abstrahlung der Leitungsstruktur durch ein Signal hoher Leistung bedingte Störstrahlung und/oder Verlusstleistung vermindert oder verhindert wird.

Weiterhin von Vorteil ist, die Elektronikeinheit skalierbar, also aus vorgebbaren, einheitlichen Bauteilen bzw. Bauteilkombinationen und Schaltungsteilen aufzubauen, wodurch sich gemäss eines Baukastenprinzips die Varianten der Elektronikeinheiten und damit der Steuermodule begrenzen lassen. Unterschiedlichste Funktionalitäten für die Steuerung oder Regelung von Betriebsabläufen bzw. Prozessen bei einem Fahrzeug lassen sich dann zweckmässigerweise durch gemeinsame Verwendung mehrerer sich ergänzender Steuermodule oder Elektronikeinheiten realisieren, wobei dabei trotzdem noch fehlende Funktionalität durch Aufbringen entsprechender Bauteile auf der flexiblen Erweiterung erzielt werden kann.

Die Steuerung oder Regelung wird durch wenigstens eine Steuereinheit durchgeführt und die Steuereinheit enthält Programme und/oder Daten zur Steuerung oder Regelung bestimmter erster Betriebsabläufe, wobei wenigstens ein Peripherieelement mit der Steuereinheit verbunden ist und Daten in Form von Signalen von dieser empfängt und/oder an diese sendet. Vorteilhafterweise dient dabei das betreffende Peripherieelement zur Steuerung oder Regelung zweiter Betriebsabläufe und es werden die Signale vor dem Empfangen und/oder nach dem Senden in einem Steuermodul verarbeitet, welches zwischen die Steuereinheit und das Peripherieelement geschaltet ist, wobei die Verarbeitung der Signale durch das Steuermodul zur Steuerung oder Regelung der zweiten Prozesse bzw. Betriebsabläufe notwendige elektronische Bauteile und/oder Funktionen ergänzt, die in der Steuereinheit und/oder dem Peripherieelement zur Steuerung oder Regelung der zweiten Prozesse fehlen oder dazu nicht eingesetzt werden können, weil sie z.B. den ersten Prozessen zur Verfügung stehen, wobei die Steuerung oder Regelung der ersten Prozesse neben und unabhängig von der Steuerung oder Regelung der zweiten Prozesse durchgeführt wird. Es wird also vorteilhafterweise eine Steuereinheit die eigentlich für erste Prozesse zur eingesetzt ist und schon vorhanden ist einfach mit genutzt, wenn diese noch Kapazität für die Programme und/oder Daten der zweiten Prozesse besitzt, die nicht in dem einfach aufgebauten Steuermodul ausgeführt werden. So können zweckmässigerweise neben oder statt der Anbindung der Peripherieelemente über flexible Erweiterungen auch andere Möglichkeiten der Kontaktherstellung eingesetzt werden.

Durch das erfindungsgemässe Konzept ist eine einfache Produktpflege möglich, da gestörte oder veraltete Steuermodule bzw. die Elektronikeinheiten einfach und unkompliziert durch funktionstüchtige oder einer neuen Generation angehörende Steuermodule ersetzt werden können.

Weitere Vorteile und vorteilhafte Ausgestaltungen sind Gegenstand der Beschreibung und der Ansprüche.

### Zeichnung

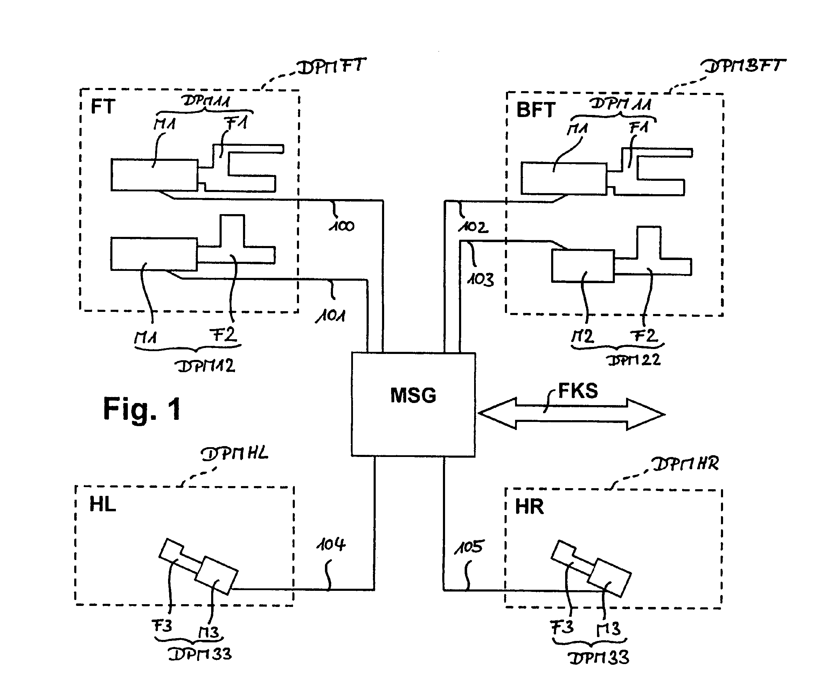

Im weiteren wird die Erfindung anhand der in der Zeichnung enthaltenen Figuren dargestellt.
Dazu zeigt Figur 1 eine zentrales Steuereinheit als Master mit an diesem über bidirektionale Schnittstellen angekoppelten Steuermodulen.
Figur 2 bestehend aus Figur 2a und 2b erläutert schematisch den Aufbau der Steuermodule und das als Weiterbildung der Erfindung eingesetzte Baukastenkonzept.
Figur 3 offenbart das erfindungsgemäße Konzept eines Mastersteuergerätes mit einzelnen Steuermodulen in Anlehnung an Figur 1, wobei das Mastersteuergerät Rechenleistung, Betriebssystem und Gateway für die Steuermodule zur Verfügung stellt.
In Figur 4 ist eine spezielle Erweiterung der erfindungsgemäßen Module in Form einer Leiterfolie zur Aufnahme von Bauteilen und zur Anbindung an Peripherieelemente, also Sensorik oder Aktuatorik, dargestellt.
Figur 5 bestehend aus Figur 5a und 5b zeigt eine spezielle Anwendung des Konzepts mit einer flexiblen Erweiterung für den Übergang zwischen einem Nass- und einem Trockenraum.
In Figur 6 ist eine weitere spezielle Anwendung des Modulkonzeptes mit flexibler Erweiterung für eine Spiegel- bzw. eine Scheibenheizung dargestellt.
Figur 7 bestehend aus Figur 7a und 7b zeigt nochmals zwei Möglichkeiten der Anbindung der Steuermodule an die Bidirektionale Schnittstelle zur Mastersteuereinheit.

### Beschreibung der Ausführungsbeispiele

Figur 1 zeigt das erfindungsgemässe Konzept der Aufteilung der Funktionalität in ein Grundsteuergerät oder zentrale Steuereinheit das Mastersteuergerät MSG, z.B. ein Komfortsteuergerät für Schliesssystem, Festerheber und/oder Spiegelsteller, sowie intelligente Steuermodule sogenannte Distribution and Power Moduls DPM vor Ort, beispielsweise in den Fahrzeugtüren. Dabei ist das Mastersteuergerät MSG beispielsweise an ein im Fahrzeug bereits vorhandenes Fahrzeugkommunikationssystem FKS, insbesondere ein Bussystem wie CAN oder TTP/C, angebunden.

Diese Steuereinheit MSG kann auch ein bereits im Fahrzeug vorhandenes Steuergerät beispielsweise zur Motor- und/oder Getriebesteuerung o.ä. sein, welches durch seine Anbindung an das Fahrzeugkommunikationssystem, insbesondere ein Feldbussystem basierend auf einer Zweidrahtleitung, ein Gateway zu diesem FKS besitzt und zur Steuerung oder Regelung bezüglich der Steuermodule DPM das Betriebssystem und die übrige Software, insbesondere die Steuer- oder Regelalgorithmen beinhaltet oder diese eingespeichert bekommt wenn die dafür nötige Kapazität insbesondere bezüglich Rechenleistung und Speicherplatz zu Verfügung steht.

Das als zentrales Steuergerät MSG verwendete und bereits vorhandene Steuergerät, wird gegebenenfalls um eine oder mehrere einfache Anschüsse, insbesondere Eindrahtbusschnittstellen, erweitert, wenn diese nicht vorhanden sind. Über diese Eindrahtbusschnittstellen werden die Steuermodule DPM über Leitungen 100 bis 105 mit dem Mastersteuergerät MSG verbunden.

Im hier vorgestellten Beispiel dienen die Module DPM12, DPM22 und DPM33 zur Steuerung oder Regelung eines Schliesssystems für die Fahrzeugtüren und zur Verstellung der Aussenspiegel. Die Bereiche sind nach ihren Verbauorten bezeichnet. Dabei bedeutet FT die Fahrertürseite und BFT die Beifahrertürseite und HL Hinten links und HR Hinten rechts, mit oder ohne Türen. Entsprechend dieser Einbauorte sind die Gesamtmodule mit DPMFT, bestehend aus zwei Steuermodulen DPM11 und DPM12, DPMBFT, bestehend aus DPM11 und DPM22, DPMHL und DPMHR, jeweils bestehend aus einem Steuermodul DPM33, bezeichnet.

Die DPMs selbst bestehen aus einem elektronischen Modulteil M und daran über eine vorzugsweise einheitliche Schnittstelle anschliessbare flexible Erweiterung F, im weiteren auch als Folienerweiterung bezeichnet. Die Steuermodule sind somit aus einer Elektronikeinheit M, hier M1, M2 oder M3 und zugeordneter flexibler Erweiterung F, hier F1, F2 oder F3 zusammengesetzt, wodurch sich auch die Notation DPM11, ..12, ..22, ..33 ergibt.

Die Module DPM11 dienen dabei beispielsweise zur automatischen Verstellung und/oder Heizung eines Aussenspiegels und die Module DPM12, DPM22, DPM33 sind der variantenbestimmende Teil eines automatischen Schliesssystems. Ist das Mastersteuergerät MSG beispielsweise an einen CAN-Bus als FKS angeschlossen, so kann in den Elektronikeinheiten M1 bis M3 im weiteren auch als Module bezeichnet auf ein CAN-Gateway, insbesondere einen kostenintensiven CAN-Controller für die Steuermodule zur Anbindung an den Fahrzeugbus FKS verzichtet werden.

Über die Verbindungen bzw. Schnittstellen 100 bis 105 sind die Steuermodule DPM mit der Zentalsteuereinheit MSG verbunden. Dadurch, dass das zentrale Steuergerät ein Betriebssystem und aufwendige Steuersoftware in Form komplexer Algorithmen, sowie Gateway beinhaltet und zur Verfügung stellt, können die Steuermodule DPM, insbesondere die darin enthaltenen Elektronikeinheiten M1 bis M3 eine sehr einfache Struktur bzw. Elektronik beinhalten. Sie dienen dazu, die ihnen gesendeten Informationen in Stell- bzw. Schaltsignale umzuwandeln und gegebenenfalls eingelesene Signalzustände oder Sensorsignale umzuwandeln und als Information an das Zentralsteuergerät MSG zurück zu senden.

Vorteilhafterweise sind die Elektronikeinheiten M1 bis M3 bzw. die Steuermodule DPM11 bis DPM33 so plaziert, daß die durch die Module anzusteuernden Aktuatoren bzw. angebundene Sensorik möglichst kurz auf direktem Weg angebunden werden können. Diese Anbindung kann als flexible Erweiterung neben einer Folienerweiterung bzw Flexfolie auch aus diskreten Leitungen oder aber direkt, beispielsweise über Stecker an die Elektronikeinheiten M1 bis M3 erfolgen.

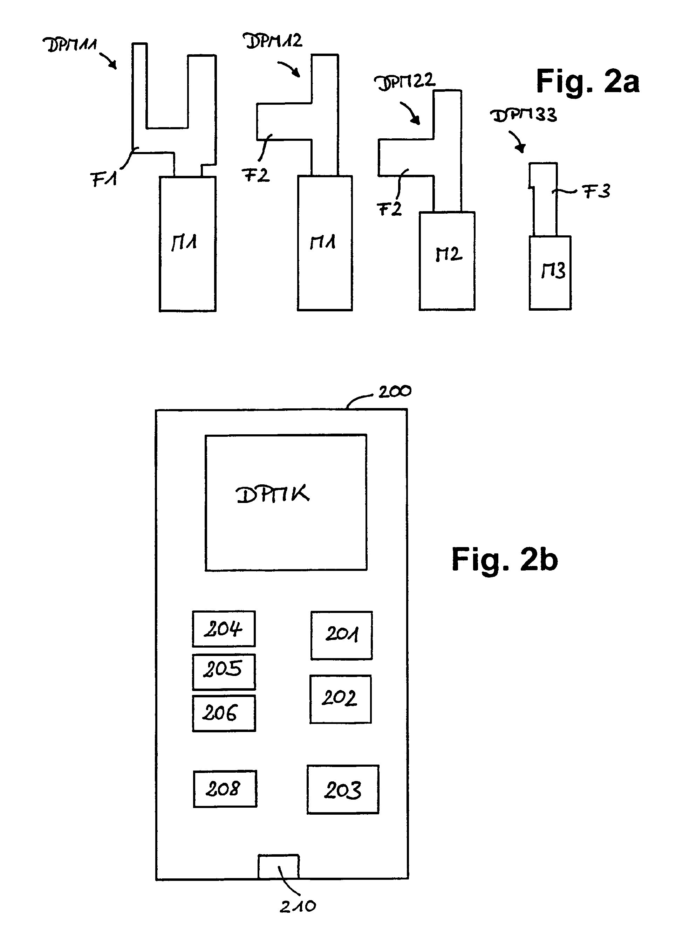

In Figur 2, bestehend aus Figur 2a und 2b, sind in Figur 2a verschiedene Steuermodulausprägungen bestehend aus Elektronikeinheit M1 bis M3 und Folienerweiterung F1 bis F3 und in Figur 2b beispielhaft eine Elektronikeinheit M im Aufbau dargestellt. Dabei soll auch das an der Notation in Figur 1 angedeutete bevorzugte Baukastensystem dargestellt werden. Figur 2a zeigt verschiedene Ausprägungen der Steuermodule DPM. In der Notation wird eine Kombination einer Elektronikeinheit M1 mit einer Folienerweiterung F1 als DPM11 bezeichnet. Somit wird eine Elektronikeinheit M1 mit einer Folienerweiterung F2 als DPM12 u.s.w. bezeichnet.

Zur Reduzierung der Varianten und damit zur Kosteneinsparung wird vorzugsweise ein solches Baukastenprinzip eingesetzt. Dabei können die Folienerweiterungen entsprechend dem Baukastenprinzip aus einer vorgebbaren Anzahl auswählbar sein oder je nach Anwendungsfall speziell ausgeprägt und hergestellt werden. Speziell die Elektronikeinheiten M1 bis M3 werden vorteilhafterweise in begrenzter Anzahl, also mit bestimmten Bestückungsvarianten vorgegeben, wodurch der Aufwand noch einmal reduziert werden kann. In unserem Beispiel werden drei in der Bestückung unterschiedliche Varianten von Elektronikeinheiten M1 bis M3 eingesetzt.

Figur 2b zeigt dazu den prinzipiellen Aufbau einer DPM-Elektronikeinheit M mit 200 bezeichnet. Diese enthält den DPM-Kern DPMK, der aus einer fest verdrahteten Logik oder einem kleinen Controller besteht, wobei der insbesondere als Controller ausgebildete DPMK ebenfalls sehr einfach aufgebaut sein kann. Der DPM-Kern übernimmt dabei die Signalaufbereitung bzw. Signalverarbeitung und die Spannungsversorgung. Er bedient somit die Schnittstelle 210 zum Zentralsteuergerät MSG sowie die Ausgänge und Eingänge des Moduls 200. Wie vorher erwähnt, werden die eigentlichen Steuerprozesse bzw. Regelungsprozesse im Mastersteuergerät MSG abgearbeitet. Einfache Algorithmen können aber gegebenenfalls auch im DPM-Kern DPMK selbst durchgeführt werden.

Neben dem DPMK enthält die Elektronikeinheit 200 unreschiedliche Bauteile bzw. Schaltungsteile wie Eingänge 204 bis 206, z.B. 20mA, beispielsweise eine, z.B. 5V, Analogschnittstelle 208 einen Low-Side- und einen High-Side-Schalter 201 und 202 sowie eine Motorbrücke 203. Die Elektronikeinheit der Steuermodule DPM enthält somit eine bestimmte Anzahl von Eingängen und eine bestimmte Anzahl von Ausgängen z. B. mit Treibern. Je nach Umfang der Elektronikeinheit hier M1 bis M3 ist eine unterschiedliche Anzahl von Eingängen und Ausgängen bzw. Bestückungsvarianten vorgesehen. In diesem Ausführungsbeispiel werden je nach unterschiedlicher Bestückung und Ausprägung die drei Varianten M1 bis M3 unterschieden. Die Elektronikeinheit M3 enthält beispielsweise zusätzlich zum DPM-Kern DPMK wie erwähnt als Befehlsinterpreter in festverdrahteter Logik oder als sehr einfach aufgebauter Controller eine H-Brücke und einen High-Side-Schalter, um die Grundfunktionalität darzustellen. Eine erste Erweiterungsstufe als Elektronikeinheit M2 umfasst zusätzlich eine definierte Anzahl von H-Brücken, je nach festgelegten Stromkategorien sowie einige Eingangsstufen zum Erfassen von beispielsweise analogen Eingangssignalen oder digitalen Eingangssignalen bzw. Schaltsignalen. Eine zusätzliche Vergrösserung des Funktionsumfangs bzw. Erweiterung der Bestückung führt dann zur Elektronikeinheit M1. Somit können die Module DPM mit den Elektronikeinheiten in wenigen Standardgrössen einzeln oder in Kombination miteinander alle geforderten Funktionen abdecken. Das heisst auch, dass die anzusteuernde Peripherie also Aktuatorik und Sensorik also jede periphere Baugruppe nicht zwingend eigene Elektronik besitzen muß, sondern durch die geeignete Wahl des jeweiligen DPM wird der Gesamtfunktionsumfang abgedeckt. Sollten dennoch Funktionalitäten fehlen oder nicht zur Verfügung stehen, kann dies durch Aufbringen von Bauteilen auf die flexible Erweiterung ausgeglichen werden.

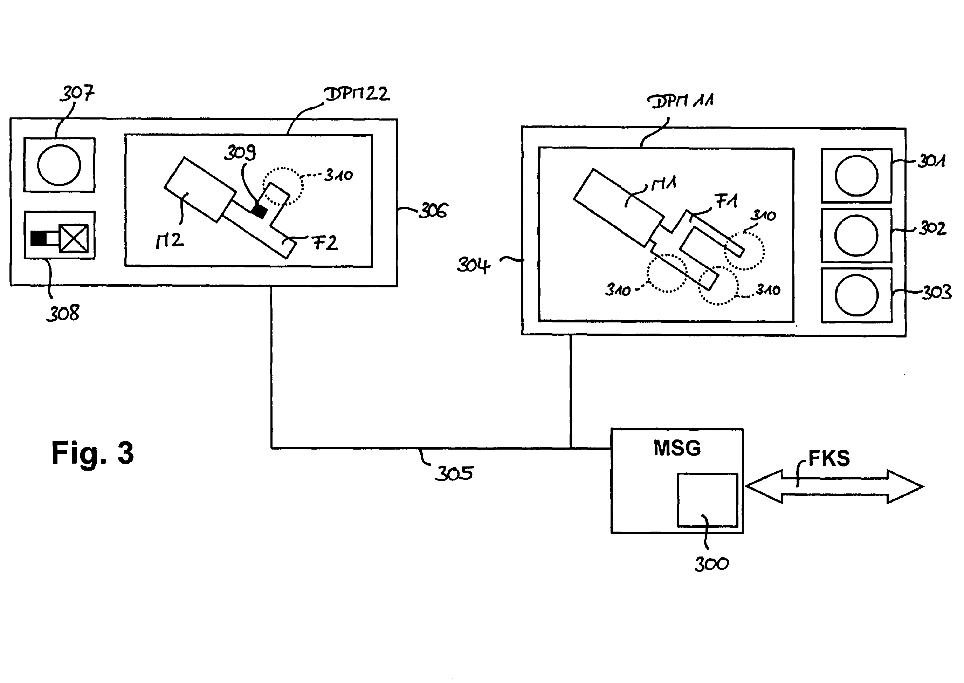

In Figur 3 ist noch einmal das Konzept etwas detaillierter für eine Außenspiegelverstellung 304 und eine Schliesseinheit 306, also als Konzept für die Fahrzeugtüren, insbesondere für DPMBFT aus Figur 1, dargestellt. Mit MSG ist wiederum das zentrale Steuergerät, das Mastersteuergerät dargestellt. Dieses stellt wiederum Betriebssystem und die Algorithmen zur Verfügung. Das Steuergerät MSG kann einerseits als Grundsteuergerät, insbesondere als Standardsteuergerät, explizit für die Anwendung eingebaut sein oder die zusätzliche Funktionalität wird in einem bereits vorhandenen Steuergerät beispielsweise für die Komfortelektronik oder ein Getriebesteuergerät eingebracht bzw. programmiert.

Weiterhin stellt das zentrale Steuergerät MSG den Gateway zu dem fahrzeuginternen Kommunikationssystem FKS, insbesondere einen CAN-Bus oder einen TTP/C-Bus zur Verfügung. Damit kann in den Steuermodulen DPM22 und DPM11 ein aufwendiger CAN-Controller oder sonstiger komplexer Bus-Controller eingespart werden. Über eine bidirektionale Verbindung 305 ist das MSG mit den Modulen DPM22 und DPM11 verbunden. Mit 304 und 306 ist der Gesamtumfang für die jeweilige Funktionalität also mit Aktuatorik und Sensorik bezeichnet.

304 stellt dabei die Gesamtbaugruppe für eine Spiegelverstellung dar. Mit 301 ist dabei der Steller zum Kippen des Spiegels um die Hochachse dargestellt und mit 302 der Steller für die Einstellmöglichkeit, durch Kippen um die Querachse. Mit 303 ist der Steller für die automatische Spiegelanklappfunktion beispielsweise zum Einfahren in die Garage oder in eine Waschanlage des Fahrzeugs dargestellt. Die Stellmotoren für 301, 302 und 303 werden direkt auf der Folienerweiterung F1 des Moduls DPM11 angebracht. Dazu sind die hier noch identisch bezeichneten Anschlussstellen der Steller 310 vorgesehen.

Mit 306 ist die Baugruppe für eine Schliesseinheit im Fahrzeug, z.B. in der Beifahrertür dargestellt. Über die flexible Erweiterung bzw. Folienerweiterung F2 des Steuermoduls DPM22 wird dabei einerseits der Steller 307 beispielsweise für ein Elektroschloss mit der Elektronikeinheit M2 über Anschlussstelle 310 verbunden, in dem der Steller 307 direkt mit der Leiterfolie F2 kontaktiert wird. Die Anschlussstellen der Steller sind hier noch einheitlich bezeichnet und werden in den nachfolgenden Zeichnungen genauer unterschieden. Ebenso wird ein Sensor 308, insbesondere ein Hallsensor, zur Überwachung der Position des Stellers 307 des Elektroschlosses auf der Folienerweiterung F2 bei 309 aufgebracht.

Wie hier dargestellt, kann vorteilhafterweise das Grundgerät also das Mastersteuergerät MSG eine gemiensame Ein-/Ausgangsleitung 305 besitzen, über welche in der Initialisierung erkannt werden kann welche Peripherie angeschlossen ist und bedient werden muss.

Eine direkte und aufwendige Anbindung der Steuermodule, hier DPM11 und DPM22 an den Fahrzeugbus FKS, insbesondere einen CAN-Bus ist somit nicht vorhanden. Für den Einsatz z. B. zum Steuern der Fahrzeugtürfunktionen kann also je Tür oder auch je Steuermodul oder nur je Fahrzeugseite eine getrennte Leitung vorgesehen werden. Damit können die DPM bzw. die Blöcke 306 und 304 bzw. die Steuermodule und/oder die Peripherieelemente allgemein dort lokalisiert werden, wo der Vorteil bezüglich eingesparter Leitungen, Kühlmöglichkeit, Einbaubedingungen, insbesondere Bauraum, etc. optimal ist. Gegenüber einem normalen Feldbuskonzept, insbesondere CAN mit Zweidrahtleitung kann durch die Eindrahtschnittstelle hier 305 zusätzlich Leitungsmaterial eingespart werden.

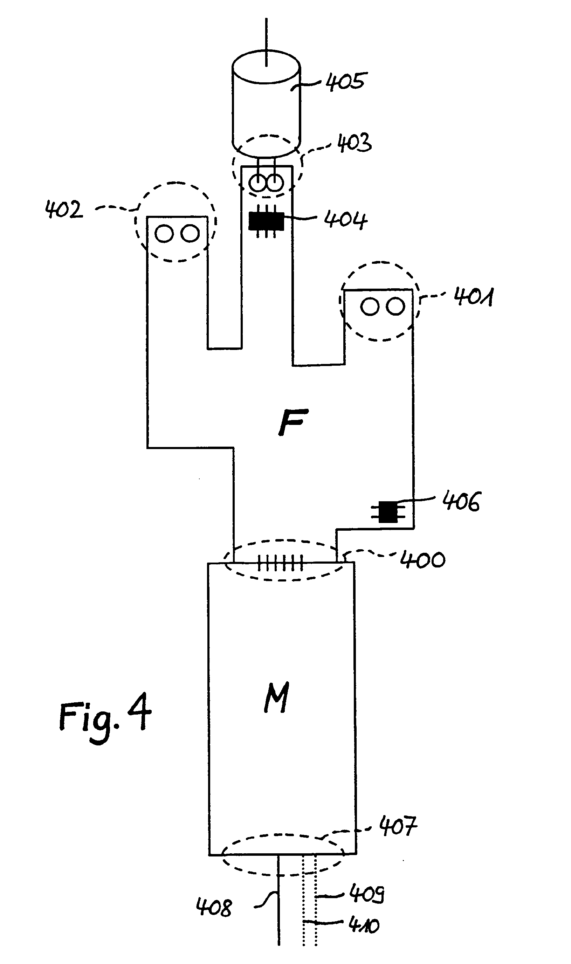

In Figur 4 sind verschiedene Möglichkeiten der Ausprägung der Folienerweiterung dargestellt. Die Folienerweiterungen F können so ausgeprägt sein, dass an ausgebildete Anschlusszungen 401, 402 bzw. 403 durch Falten, Biegen, etc. unterschiedliche Aktuatoren oder Sensoren angeschlossen werden können. Die Anschlüsse müssen dabei mit der Folie nicht in einer Ebene liegen. Desweiteren kann die Folienerweiterung Bauelemente wie z. B. Hallsensoren oder Temperatursensoren 406 an einer geeigneten Stelle aufnehmen, so dass gegebenenfalls der Kontakt zum zu sensierenden Bauteil in idealer Weise hergestellt ist. Ebenso können Leistungsendstufen 404 auf der Folie so plaziert werden, dass ihre Kühlanbindung und/oder der Bauraum optimal genutzt ist. Eine Anordnung der Leistungshalbleiter 404 in der unmittelbaren Nähe der Aktuatoren 405 über Anschlusszunge 403 ist ebenso möglich. Die Elektronikeinheiten M (M1 bis M3) können so entweder die High-Side- und Low-Side-Bauteile enthalten oder diese sind wie beispielsweise 404 auf der Leiterfolie untergebracht. Damit steigt zwar in der Regel der Leitungsaufwand zur Anbindung des Schalters 404, es können aber damit beispielsweise im Zuge der EMV-Problematik lange Leitungen mit hoher Leistung zum jeweiligen Aktuator vermieden werden. Aktuatoren wie z.B. Motoren insbesondere Stellmotoren 405 können direkt an die Anschlusszungen 401 bis 403 der Folienerweiterung angebunden werden. Die Anbindung kann über Löten, Schweissen, Krimpen oder sonstiges erfolgen. Dadurch können die gewünschten Anschlussbereiche also die Folienenden bzw. Anschlusszungen 401 bis 403 im dreidimensionalen Raum zu den zu kontaktierenden Aktuatoren oder Sensoren geführt werden. Die bidirektionale Verbindung 408 wird über eine Schnittstelle 407 in die Elektronikeinheit geführt. Je nachdem ob die Energieversorgung im Steuermodul oder im Peripherieelement bzw. in dessen Nähe, z.B. als Batterie bzw. Akkumulator oder dem Steuermodul zugeleitet wird sind die nötigen Leitungen, z.B. Masse 410 und Phase 409 vorhanden und müssen in der Schnittstelle 407 berücksichtigt werden oder nicht.

Die Verbindung zwischen Folie F und Elektronikeinheit M mit 400 bezeichnet, ist vorteilhafterweise vereinheitlicht, so dass unterschiedliche Kombinationen von Elektronikeinheiten M (M1 bis M3) und Ausprägungen der Folienerweiterung F (F1 bis F3) bzw. bei einheitlicher Elektronikeinheit M unterschiedliche Folienerweiterungen eingesetzt werden können und umgekehrt.

Die flexiblen Erweiterungen der Steuermodule, auch als Folienerweiterungen bezeichnet, sind als Leiterfolien oder Flexfolien ausgebildet. Dabei sind Leitungsbahnen oder Leitungsstrukturen zur Energie- und/oder Signalübertragung zu und/oder von den Peripherieelementen von einem nichtleitenden, flexiblen, insbesondere verformbaren, Material, wie Kunststoff bzw. einer Kunstofffolie umgeben, wobei die Leiterbahnen und/oder -strukturen auch nur aufgebracht sein können. Bei Verwendung einer Ummantelung mit Polymeren ist dann von Vorteil, dass neben der flexiblen Plazierung der Steuermodule bzw. der Peripherieelemente auch Problematiken wie für die Leiterstrukturen bzw. die Signal- und/oder Energieleitung ungünstige Umgebungseinflüsse weitgehend ausgeschlossen werden können. Der Einfluss von z.B. Feuchtigkeit oder Nässe kann ebenso ausgeschlossen werden wie von z.B. Verschmutzung. Die Polymere könne so gewählt sein, dass eine Verformung der Folienerweiterung zur Kontaktierung der Peripherieelemente bestehen bleibt, die flexible Erweiterung sozusagen gedächtnisbehaftet ist. Dies kann aber ebenso durch die eingeschlossenen Leiterbahnen oder zusätzliche Stütz- und Verformungsbahnen als Einschluss erreicht werden.

Weiterhin können vorteilhafterweise die Leiterstrukturen bzw. die flexible Erweiterung auch im Zuge der Problematik der elektomagnetischen Verträglichkeit zusätzlich gegenüber solchen Störungen abgeschirmt werden und/oder es kann die Aussendung eigener Störstrahlung, durch das Steuermodul bzw. die flexible Erweiterung und/oder darauf plazierter Bauteile, insbesondere über die Leitungsstrukturen, eingedämmt oder verhindert werden. Dies kann durch eine zusätzlich aufgebrachte Schicht von leitfähigem Polymer oder durch Bedampfung mit einem Metallsubstrat geschehen und Ableitung z.B. gegen Masse.

Neben standartisierten Folienerweiterungen gemäss der Idee des Baukastenprinzips der Elektronikeinheiten, können aber auch speziell gestaltete Folienerweiterungen mit jeder beliebigen Formgebung an die Elektronikeinheiten M angeschlossen werden.

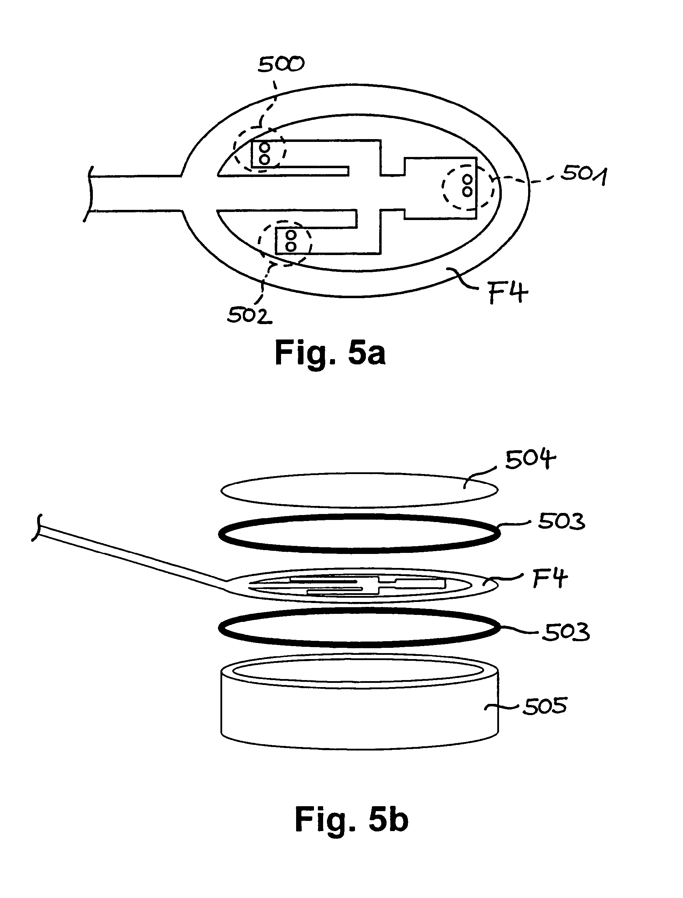

Ein spezielles Ausführungsbeispiel zeigt dabei Figur 5, bestehend aus Figuren 5a und 5b. Dabei ist eine Folienerweiterung F4 in den Aussenabmessungen ringförmig ausgebildet und durch spezielle Formgebung mit Anschlussstellen 500 bis 502 ausgestattet. Durch die spezielle Formgebung der Folienerweiterung kann diese z.B. durch eine Dichtstelle geführt werden, so daß sie plan auf der abzudichtenden Stelle liegt.

Beispielsweise durch eine Dichtung 503 auf beiden Seiten der Folienerweiterung kann dann die Abdichtung erfolgen, wie dies in Figur 5b dargestellt ist. In einem umgebenden Nassraum sollen Aktuatoren oder Sensoren in einem Trockenraum 505 angeschlossen werden. Durch die spezielle ringförmige Formgebung der Folie F4 entsprechend der beispielhaften Form der Dichtstelle zu Trockenraum 505 kann nun durch Verwendung je einer Dichtung 503 beidseits der Folienerweiterung F4 durch einen Deckel F5 der Trockenraum und damit die Anschlussstellen 500 bis 502 dicht gegenüber dem Nassraum abgeschlossen werden. Durch Verdickung des Randes oder eine speziell eingebrachte Dichtung könnte die Folienerweiterung F4 in einer weiteren Ausgestaltung selbst als Dichtung dienen.

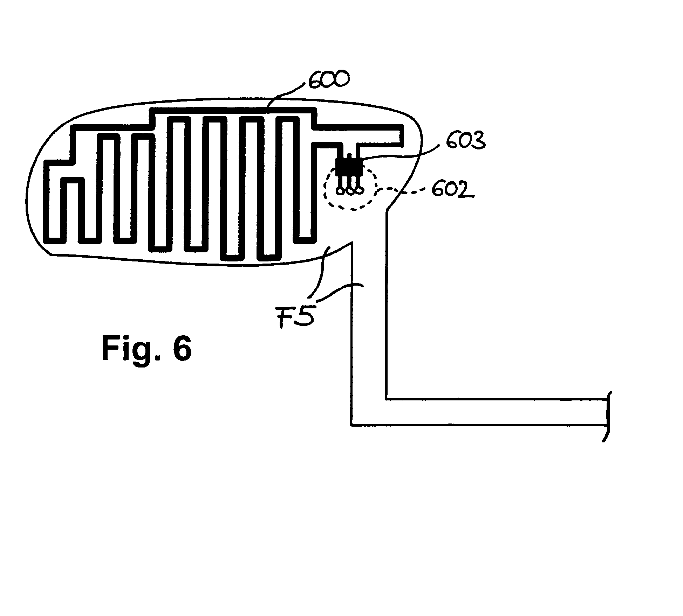

Um die ungemein hohe Zahl der unterschiedlichen Einsatzmöglichkeiten der erfindungsgemässen Idee, insbesondere bei Verwendung einer Folienerweiterung darzustellen, ist in Figur 6 eine Spiegel- bzw. Scheibenheizung dargestellt. Dabei ist beispielsweise auf einen Spiegel eine Heizmatte in Form eines geformten Heizdrahtes 600 aufgebracht. Diese Heizmatte kann zusammen mit Kunstofffolie als Folienerweiterung F5 ausgebildet sein, wodurch die Anschlußstelle 602 für den Leistungstreiber der Spiegelheizung 603 direkt im Spiegelraum untergebracht werden kann. Dadurch kann die Verlustleistung des Leistungstreibers 603 ebenfalls zur Beheizung des Spiegels genutzt werden. Vorteilhafterweise kann beispielsweise bei Verbundglas die Heizmatte 600 in der Folie des Verbundglases eingebracht sein. Der Heizdraht 600 ist somit mit der Folie als Folienerweiterung F5 in die Verbundglasscheibe als Folie derselben integriert, wobei der Anschluss der Folienerweiterung F5 aus dem Glas herausgeführt ist. Dabei kann der Leistungstreiber 603 ebenso direkt auf dem Glas oder im Falle eines Spiegels mit dieser Verbundglasmethode auf dem Spiegelglas selbst sitzen. Somit wird dann die Verlustleistung des Treibers zu nahe zu 100% zur Beheizung des Spiegels bzw. des Glases eingesetzt also nahezu ohne Verlustleistung.

Gleiche oder vergleichbare Verfahren sind für Sitzheizung, Fensterheber, Türschlösser, Scheibenheizung, Scheibenwischer, Motoren also diverse Stellmotoren oder auch Lampen und sonstigen Aktuatoren oder Sensoren einsetzbar.

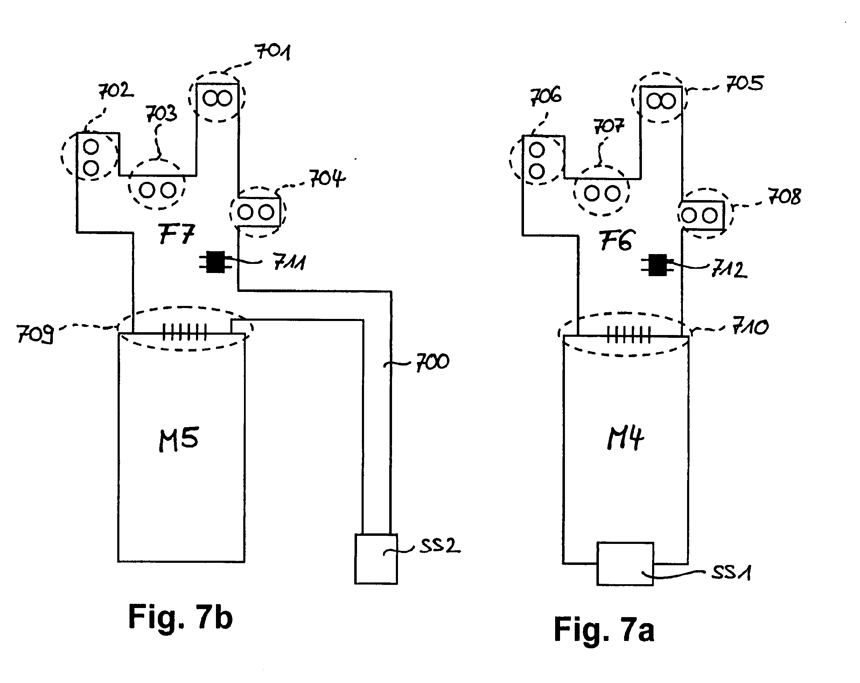

In Figur 7 bestehend aus Figur 7a und 7b sind schließlich noch einmal zwei Anschlußmöglichkeiten von Elektronikeinheiten über besagte Eindrahtbusschnittstelle an das Mastersteuergerät MSG dargestellt. Eine Elektronikeinheit M4 mit einer Folienerweiterung F6 enthält dabei die Schnittstelle SS1 integriert in die Elektronikeinheit M4 zum Anschluß an den Eindrahtbus zu dem zentralen Steuergerät. Dabei sind die Anschlussstellen dieser Folienerweiterung F6 mit 705 bis 708 bezeichnet. Mit 710 ist die Standardschnittstelle und mit 712 ein beliebiges Bauteil bezeichnet.

Eine weitere Möglichkeit dargestellt in Figur 7b ist die Folienerweiterung F7 zu Elektronikeinheit M5 mit einer Kontaktzunge 700 zu versehen, auf welcher die Schnittstelle SS2 zur Anbindung an den Eindrahtbus zum zentralen Steuergerät angeschlossen ist. Die Anschlissstellen sind hier mit 701 bis 704, die einheitliche Schnittstelle mit 709 und ein Bauteil mit 711 bezeichnet.

## Patentansprüche

1. Steuermodul (DPM) zur Durchführung von Steuerungs- und Regelungsfunktionen für ein Fahrzeug, wobei die Steuerungs- oder Regelungsfunktionen durch eine Ansteuerung und/oder eine Auswertung von Signalen eines Peripherieelements durchgeführt werden, wobei das Steuermodul (DPM) zwischen eine Steuereinheit (MSG) und das Peripherieelement (301-307) geschaltet ist und das Steuermodul (DPM) aus einer Elektronikeinheit (M) sowie einer flexiblen Erweiterung (F) zusammengesetzt ist, an welche das Peripherieelement (301-307) kontaktierbar ist, wobei eine vorgegebene, einheitliche Schnittstelle (400) zwischen der Elektronikeinheit und der flexiblen Erweiterung verwendet wird und damit gemäß einem Baukastenprinzip verschiedene vorgegebene Elektronikeinheiten (M1-M3) mit verschiedenen flexiblen Erweiterungen (F1-F3) kombinierbar sind, wobei die flexible Erweiterung als verformbare Folienerweiterung mit Leitungsbahnen oder Leitungsstrukturen ausgebildet ist, so dass auf die verformbare Folienerweiterung für die Steuerungs- oder Regelungsfunktionen fehlende Bauteile aufgebracht werden können.

2. Steuermodul nach Anspruch 1, **dadurch gekennzeichnet, dass** auf der flexiblen Erweiterung das Peripherieelement, insbesondere ein Sensor, direkt aufgebracht ist.

3. Steuermodul nach Anspruch 1, **dadurch gekennzeichnet, dass** die Elektronikeinheit skalierbar ist und in bestimmten Varianten verwendet wird, wobei fehlende Funktionen der bestimmten Varianten der Elektronikeinheit durch Kombination wenigstens zweier Varianten der Elektronikeinheit oder der Steuermodule und/oder durch das Aufbringen von elektronischen Bauteilen auf der flexiblen Erweiterung des Steuermoduls oder der Steuermodule erzielt werden.

4. Vorrichtung zur Durchführung von Steuerungs- oder Regelungsfunktionen bei einem Fahrzeug mit einem Steuermodul sowie einem Peripherieelement und einer Steuereinheit nach Anspruch 1.

5. Vorrichtung zur Durchführung von Steuerungs- oder Regelungsfunktionen für ein Fahrzeug nach Anspruch 4, mit wenigstens einer Steuereinheit, wobei die Steuereinheit zur Durchführung erster Steuerungs-und Regelungsfunktionen dient, wobei die Steuereinheit mit wenigstens einem Peripherieelement verbunden ist, welches Signale empfängt und/oder sendet und welches für unabhängig von den ersten Steuerungs- oder Regelungsfunktionen durchgeführte zweite Steuerungs- oder Regelungsfunktionen vorgesehen ist, Steuerungs- oder Regelungsfunktionen vorgesehen ist, wobei Programme und/oder Daten für die zweiten Steuerungs- oder Regelungsfunktionen in der Steuereinheit eingespeisst sind oder werden, wobei die Vorrichtung wenigstens ein zwischen die Steuereinheit und das Peripherieelement geschaltetes Steuermodul enthält, welches derart ausgebildet ist, dass es elektronische Bauteile und/oder Funktionen ergänzt, die zur Durchführung der zweiten Steuerungs- oder Regelungsfunktionen notwendig sind und in der Steuereinheit und/oder dem Peripherieelement fehlen oder nicht zur Verfügung stehen.

## Claims

1. Control module (DPM) for carrying out open-loop and closed-loop control functions for a vehicle, the open-loop or closed-loop control functions being carried out by actuating and/or evaluating signals of a peripheral element, the control module (DPM) being connected between a control unit (MSG) and the peripheral element (301-307), and the control module (DPM) being composed of an electronic unit (M) and a flexible extension (F) with which the peripheral element (301-307) can be placed in contact, a predefined uniform interface (400) being used between the electronic unit and the flexible extension and it thus being possible to combine various predefined electronic units (M1-M3) with various flexible extensions (F1-F3) according to a kit principle, the flexible extension being embodied as a deformable film extension with conductor tracks or conductor structures so that missing components can be applied to the deformable film extension for the open-loop or closed-loop control functions.

2. Control module according to Claim 1, **characterized in that** the peripheral element, in particular a sensor, is applied directly to the flexible extension.

3. Control module according to Claim 1, **characterized in that** the electronic unit can be scaled and is used in specific variants, missing functions of the specific variants of the electronic unit being carried out by combining at least two variants of the electronic unit or of the control modules and/or by applying electronic components of the flexible extension of the control module or control modules.

4. Device for carrying out open-loop or closed-loop control functions in a vehicle having a control module as well as a peripheral element and a control unit according to Claim 1.

5. Device for carrying out open-loop or closed-loop control functions for a vehicle according to Claim 4 having at least one control unit, the control unit serving to carry out first open-loop and closed-loop control functions, the control unit being connected to at least one peripheral element which receives and/or transmits signals and which is provided for second open-loop or closed-loop control functions which are carried out independently of the first open-loop or closed-loop control functions, programs and/or data for the second open-loop or closed-loop control functions being fed into the control unit, the device containing at least one control module which can be connected between the control unit and the peripheral element and which is designed in such a way that it supplements electronic components and/or functions which are necessary to carry out the second open-loop or closed-loop control functions and are missing or not available in the control unit and/or the peripheral element.

## Revendications

1. Module de commande (DPM) pour réaliser dans un véhicule des fonctions de commande et de régulation, effectuées par une initiation et/ou une exploitation de signaux d'un élément périphérique, le module de commande (DPM) étant monté entre une unité de commande (MSG) et l'élément périphérique (301-307),
dans lequel le module de commande (DPM) est composé d'une unité électronique (M) et d'une extension flexible (F) à laquelle peut être raccordé l'élément périphérique (301-307), entre l'unité électronique et l'extension flexible en utilisant une interface (400) homogène prédéterminée permettant de combiner de façon modulaire différentes unités électroniques (M1-M3) prédéterminées avec différentes extensions flexibles (F1-F3), et l'extension flexible est une feuille déformable munie de pistes conductrices ou de structures conductrices, permettant de monter sur l'extension en feuille déformable des composants manquant pour les fonctions de commande ou de régulation.

2. Module de commande selon la revendication 1,
**caractérisé en ce que**
l'élément périphérique, en particulier un capteur, est directement monté sur l'extension flexible.

3. Module de commande selon la revendication 1,
**caractérisé en ce que**
l'unité électronique est modulable et utilisée dans des variantes déterminées, et des fonctions manquantes des variantes déterminées de l'unité électronique sont obtenues par combinaison d'au moins deux variantes de l'unité électronique ou des modules de commande et/ou par montage de composants électroniques sur l'extension flexible du module ou des modules de commande.

4. Dispositif pour la réalisation de fonctions de commande ou de régulation pour un véhicule, avec un module de commande ainsi qu'un élément périphérique et une unité de commande selon la revendication 1.

5. Dispositif pour la réalisation de fonctions de commande ou de régulation pour un véhicule selon la revendication 4, comprenant au moins une unité de commande servant à assurer les premières fonctions de commande ou de régulation, l'unité de commande étant reliée à au moins un élément périphérique qui reçoit et/ou émet des signaux, et est prévu pour assurer des deuxièmes fonctions de commande ou de régulation indépendamment des premières fonctions de commande ou de régulation, avec des programmes et/ou des données pour les deuxièmes fonctions de commande ou de régulation enregistrés ou à enregistrer dans l'unité de commande, le dispositif comprenant au moins un module de commande monté entre l'unité de commande et l'élément périphérique qui complète des composants et/ou des fonctions électroniques nécessaires pour assurer les deuxièmes fonctions de commande ou de régulation, et qui manquent ou ne sont pas disponibles dans l'unité de commande et/ou l'élément périphérique.
